# FASCICULE DE BREVET EUROPEEN

(11) **EP 3 639 655 B1**
(45) Date de publication et mention de la délivrance du brevet: **11.08.2021**
(21) Numéro de dépôt: 19202297.8
(22) Date de dépôt: 09.10.2019
(51) Int. Cl.: A01J 5/01, A01J 5/013, A01J 5/017

(54) **DISPOSITIF DE CONTRÔLE INDIVIDUALISÉ DU LAIT POUR UNE INSTALLATION DE TRAITE ET INSTALLATION DE TRAITE ÉQUIPÉE DE PLUSIEURS DISPOSITIFS DE CONTRÔLE INDIVIDUALISÉ**
VEREINZELTE MILCHKONTROLLVORRICHTUNG FÜR EINE MELKANLAGE, UND MIT MEHREREN SOLCHEN VEREINZELTEN KONTROLLVORRICHTUNGEN AUSGESTATTETE MELKANLAGE
DEVICE FOR INDIVIDUALISED CONTROL OF MILK FOR A MILKING FACILITY AND MILKING FACILITY PROVIDED WITH A PLURALITY OF DEVICES FOR INDIVIDUALISED CONTROL

(30) Priorité: 17.10.2018 FR 1859607
(43) Date de publication de la demande: 22.04.2020
(73) Titulaire: Elcabe, 64130 Mauléon-Licharre (FR)
(72) Inventeur: ELKEGARAY, Jean-Bernard, 64130 Mauléon-Licharre (FR)
(74) Mandataire: Fantin, Laurent

(56) Documents cités:
- WO-A1-2015/170974
- GB-A- 1 512 807
- US-A- 4 548 161

## Description

La présente demande se rapporte à un dispositif de contrôle individualisé du lait pour une installation de traite ainsi qu'à une installation de traite comprenant plusieurs dispositifs de contrôle individualisé.

Selon un mode de réalisation, une installation pour la traite d'ovins ou de caprins comprend un lactoduc disposé au-dessus d'une fosse dans laquelle peut se déplacer un opérateur, deux zones de traite, disposées de part et d'autre de la fosse, sur chacune desquelles sont immobilisés les animaux à traire selon deux rangées, le train arrière de chaque animal étant orienté vers la fosse.

Selon un mode opératoire, les animaux déjà traits présents sur une première zone sont évacués et de nouveaux animaux à traire sont installés sur la première zone pendant que les animaux présents sur la deuxième zone sont traits. Lorsque les animaux de la deuxième zone sont traits, ils sont évacués et remplacés par de nouveaux animaux à traire. En parallèle les animaux présents sur la première zone sont traits.

L'installation de traite comprend, pour chaque animal d'une rangée, un tuyau de traite qui présente une première extrémité reliée au lactoduc et une deuxième extrémité reliée à un faisceau trayeur configuré pour se positionner sur les mamelles d'un animal. L'installation de traite comprend une unique série de tuyaux de traite, pour les deux zones de traite, qui sont positionnés alternativement sur les animaux de la première zone de traite puis sur les animaux de la deuxième zone de traite.

Le lactoduc est relié à un réservoir de stockage et une dépression est générée dans le lactoduc pour provoquer un écoulement du lait depuis les faisceaux trayeurs jusqu'au réservoir de stockage. Un pulsateur est également prévu pour générer un mouvement séquentiel au niveau des manchons des faisceaux trayeurs 18. La dépression générée dans le lactoduc est calibrée de manière à obtenir une dépression précise au niveau des manchons des faisceaux trayeurs.

Certaines installations de traite peuvent comprendre des systèmes de décrochage permettant de stopper la traite au niveau de chaque faisceau trayeur indépendamment les uns des autres.

Selon une première configuration, le décrochage peut être contrôlé manuellement à l'aide d'une commande. Cette configuration n'est pas satisfaisante car l'opérateur doit estimer au mieux, pour chaque animal, le moment le plus opportun pour stopper la traite et doit actionner individuellement les différentes commandes pour chaque animal.

Selon une deuxième configuration, le décrochage peut être déclenché automatiquement après une durée prédéfinie grâce à une temporisation. Cette configuration n'est pas satisfaisante car chaque animal ne donne pas nécessairement la même quantité de lait. Pour remédier à cet inconvénient, il est possible de prévoir, en complément de la temporisation, une commande pour permettre à l'opérateur d'ajouter une durée prédéfinie. Toutefois, il est difficile pour l'opérateur d'estimer le temps à ajouter pour chaque animal.

Certaines installations de traite peuvent comprendre des débitmètres positionnés au niveau de chaque tuyau de traite pour contrôler le débit de lait de chaque animal afin de déterminer in fine le volume de lait produit par chaque animal. Toutefois, les débitmètres ne permettent pas d'obtenir directement une mesure fiable du débit de lait car ce dernier s'écoule par intermittence dans le tuyau de traite. Ce phénomène d'écoulement par intermittence est encore plus accentué dans le cas d'un lactoduc positionné au-dessus des faisceaux trayeurs. Pour tenir compte de cet écoulement saccadé, la mesure du débitmètre doit être corrigée afin d'obtenir une estimation du débit du lait. Selon une autre problématique, les débitmètres ont tendance à perturber la traite car ils génèrent une perte de charge.

Enfin, les installations de traite existantes ne permettent pas la mise en place d'un suivi individualisé de chaque animal de manière pratique.

Le document US2808025 propose un dispositif pour peser le lait issu de la traite d'un animal qui comprend un réservoir suspendu à un appareil de pesage, un premier conduit présentant une première extrémité débouchant en partie supérieure du réservoir et une deuxième extrémité reliée à un lactoduc, un deuxième conduit présentant une première extrémité reliée à un faisceau trayeur et une deuxième extrémité reliée à une vanne positionnée en partie inférieure du réservoir et configurée pour faire communiquer le deuxième conduit avec une canne qui débouche en partie supérieure du réservoir et un troisième conduit présentant une première extrémité reliée au lactoduc et une deuxième extrémité reliée à la vanne configurée pour faire communiquer le troisième conduit avec un orifice de vidange prévu en partie inférieure du réservoir.

La vanne est configurée pour occuper une première position dans laquelle le deuxième conduit communique avec la canne de sorte que le lait trait est refoulé dans le réservoir via l'extrémité supérieure de la canne, le troisième conduit ne communiquant pas avec l'orifice de vidange, et une deuxième position dans laquelle le troisième conduit communique avec l'orifice de vidange de sorte que le lait stocké dans le réservoir est évacué vers le lactoduc, le deuxième conduit ne communiquant pas avec la canne.

Cette solution permet une mesure précise lorsque le faisceau trayeur ne fonctionne plus, à la fin de la traite de l'animal. Il ne permet pas de mesurer en temps réel la masse de lait présent dans le réservoir durant la traite car le deuxième conduit relié en partie inférieure du réservoir induit des secousses importantes perturbant la mesure.

La présente invention vise à remédier à tout ou partie des inconvénients de l'art antérieur.

A cet effet, l'invention a pour objet un dispositif de contrôle individualisé du lait pour une installation de traite, caractérisé en ce qu'il comprend :
- un réservoir tampon,
- un système de pesage configuré pour peser le réservoir de pesage,
- un tuyau de raccordement qui présente une première extrémité configurée pour être reliée à un lactoduc et une deuxième extrémité débouchant en partie supérieure du réservoir tampon,
- un piquage en partie supérieure du réservoir tampon configuré pour relier un tuyau de traite dont une extrémité présente un faisceau trayeur,
- un tuyau de vidange qui présente une première extrémité configurée pour être reliée au lactoduc et une deuxième extrémité reliée en partie inférieure du réservoir tampon,
- une première vanne, au niveau du tuyau de vidange, configurée pour occuper un état bloqué dans lequel elle empêche un écoulement de fluide dans le conduit de vidange et un état passant dans lequel elle autorise un écoulement de fluide dans le conduit de vidange, et
- une deuxième vanne configurée pour occuper un état passant dans lequel elle permet la traite et un état bloqué dans lequel elle stoppe la traite.

Ce dispositif de contrôle individualisé permet de pouvoir peser, de manière fiable, le lait de chaque animal afin de déterminer le volume de lait produit par chaque animal. Le fait que le tuyau de raccordement et le tuyau de traite soient reliés à la partie supérieure du réservoir, au niveau d'une zone proche du système de pesage, permet de limiter l'impact des secousses produites lors de la traite sur la mesure du poids du lait, rendant possible l'opération de pesage lors de la traite de l'animal. Cette mesure du poids s'effectue sans perturber la traite de chaque animal. Enfin, le dispositif de contrôle individualisé permet de pouvoir mettre en place un suivi de la production journalière de chaque animal.

Selon d'autres caractéristiques prises isolément ou en combinaison, le dispositif de contrôle individualisé comprend :
- un automate configuré pour commuter, à partir des mesures du poids du lait, automatiquement et de manière autonome la deuxième vanne à l'état bloqué. Cette configuration permet de pouvoir stopper la traite individuellement et de manière précise, sans l'intervention d'un opérateur.
- au moins un capteur configuré pour mesurer ou évaluer au moins une caractéristique du lait stocké momentanément dans le réservoir tampon, un automate configuré pour déterminer si la (ou les) caractéristique(s) mesurée(s) par le (ou les) capteur(s) est (ou sont) conforme(s). En cas d'anomalie, l'opérateur est informé et peut agir en conséquence.
- un tuyau d'échappement qui présente une première extrémité débouchant dans le réservoir tampon et une deuxième extrémité équipée d'une troisième vanne configurée pour occuper un état passant dans lequel elle autorise le passage de l'air et un état bloqué dans lequel elle empêche le passage de l'air. Cette configuration améliore la vidange du réservoir tampon.
- Un système de prélèvement qui comporte :
   o un tuyau de prélèvement présentant une première extrémité reliée au réservoir tampon et une deuxième extrémité libre,
   ∘ une quatrième vanne configurée pour occuper un état passant dans lequel elle permet un écoulement de lait du réservoir tampon vers la deuxième extrémité du tuyau de prélèvement et un état bloqué dans lequel elle empêche un écoulement de lait du réservoir tampon vers la deuxième extrémité du tuyau de prélèvement, et
   ∘ un support de gobelet permettant de maintenir un gobelet sous la deuxième extrémité libre du tuyau de prélèvement de sorte que le lait prélevé s'écoule dans le gobelet positionné sur le support de gobelet, ce dernier étant de préférence mobile verticalement.
   Grâce au dispositif de contrôle individualisé, il est possible de prélever aisément des échantillons et ce de manière automatisée.
- un système d'identification qui comporte un lecteur de marqueurs de gobelets positionné à proximité du support de gobelet, chaque gobelet présentant un identifiant unique qui lui est propre stocké dans un marqueur de gobelet.

L'invention a également pour objet une installation de traite comprenant plusieurs dispositifs de contrôle individualisé selon l'une des caractéristiques précédentes.

D'autres caractéristiques et avantages ressortiront de la description de l'invention qui va suivre, description donnée à titre d'exemple uniquement, en regard des dessins annexés parmi lesquels :
- la figure 1 est une représentation schématique depuis une extrémité d'une installation de traite qui illustre un mode de réalisation selon l'invention,
- la figure 2 est un schéma d'un dispositif de contrôle individualisé qui illustre un mode de réalisation de l'invention,
- la figure 3 est une vue latérale d'un dispositif de contrôle individualisé qui illustre un mode de réalisation de l'invention,
- la figure 4 est une vue en perspective depuis un premier angle de vue du dispositif de contrôle individualisé visible sur la figure 3,
- la figure 5 est une vue en perspective depuis un second angle de vue du dispositif de contrôle individualisé visible sur la figure 3,
- la figure 6 est une vue latérale de la partie inférieure du dispositif de contrôle individualisé visible sur la figure 3, et
- la figure 7 est un schéma d'un contrôle individualisé qui illustre un autre mode de réalisation.

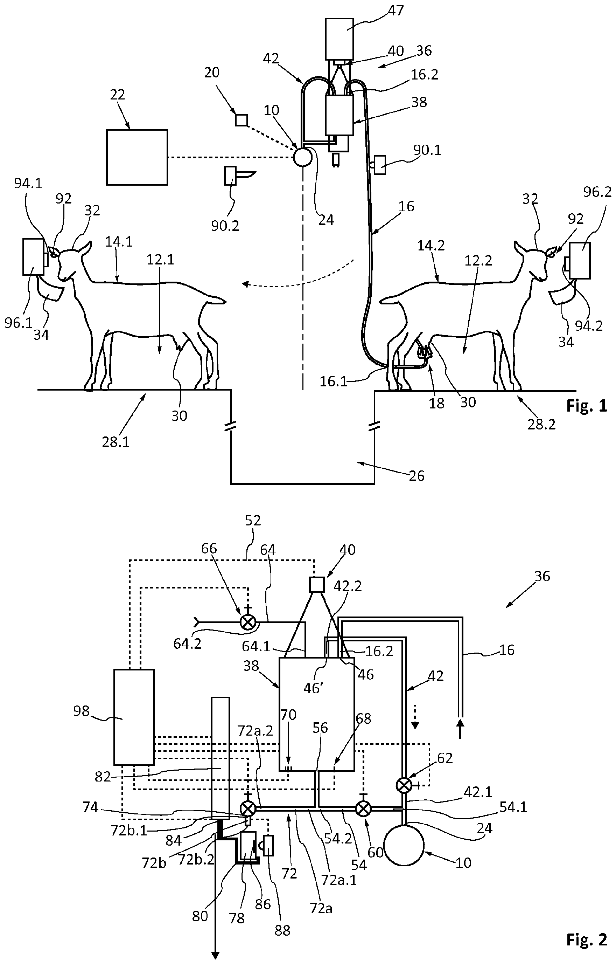

Selon un mode de réalisation visible sur la figure 1, une installation de traite comprend un lactoduc 10, une pluralité d'emplacements de traite 12.1, 12.2 chacun dédiés à un animal 14.1, 14.2, une pluralité de tuyaux de traite 16 comportant chacun à une première extrémité 16.1 un faisceau trayeur 18. Une pompe à vide 20 permet de créer une dépression, de l'ordre de - 42 KPa, dans le lactoduc 10 pour provoquer un écoulement du lait depuis chaque faisceau trayeur 18 jusqu'à un réservoir de stockage 22 via le lactoduc 10. Un pulsateur est prévu pour générer un mouvement séquentiel au niveau des manchons des faisceaux trayeurs 18. Par conséquent, le lait s'écoule dans les tuyaux de traite 16 par intermittence, de manière saccadée.

Le lactoduc 10 comprend un piquage 24 destiné à chaque tuyau de traite 16.

Selon une configuration, l'installation de traite comprend une fosse 26 et les emplacements de traite 12.1, 12.1 sont répartis de manière égale sur deux zones de traite 28.1, 28.2 disposées de part et d'autre de la fosse 26. Un animal 14.1, 14.2 est positionné au niveau de chaque emplacement de traite 12.1, 12.2 de telle sorte que son pis 30 soit orienté vers la fosse 26 et sa tête 32 à l'opposé, par exemple en face d'une mangeoire 34. Bien entendu, les emplacements peuvent être prévus sous la forme d'un carrousel.

Selon une configuration, le lactoduc 10 est positionné au-dessus de la fosse 26 et des faisceaux trayeurs 18. Le lactoduc 10 est positionné à une hauteur telle qu'il est difficilement atteignable par un opérateur positionné dans la fosse 26. Selon un mode de réalisation, le lactoduc 10 est un tuyau rigide, positionné horizontalement et qui s'étend sur toute la longueur des emplacements de traite 12.1, 12.1. A titre d'exemple, le lactoduc a un diamètre compris entre 5 et 15 cm. Bien entendu, le lactoduc peut être positionné autrement.

Les tuyaux de traite 16 sont dimensionnés de manière à ne pas générer de pertes de charge trop importantes pour ne pas altérer la traite. A titre indicatif, chaque tuyau de traite présente un diamètre intérieur compris entre 1 et 3 cm.

Selon une configuration non représentée, l'installation de traite comprend autant de tuyaux de traite 16 que d'emplacements de traite 12.1, 12.1. Selon une configuration visible sur la figure 1, l'installation de traite comprend autant de tuyaux de traite 16 que de couples d'emplacements de traite 12.1, 12.1, chaque tuyau de traite 16 étant destiné à un premier emplacement 12.1 prévu au niveau de la première zone de traite 28.1 et à un deuxième emplacement 12.2 prévu au niveau de la deuxième zone de traite 28.2.

Bien entendu, d'autres configurations sont envisageables. Le lactoduc 10, la pompe à vide 20, les tuyaux de traite 16, les faisceaux trayeurs 18 ne sont pas plus décrits car ils peuvent être identiques à ceux des installations de traite de l'art antérieur.

Selon une caractéristique de l'invention, l'installation de traite comprend au moins un dispositif de contrôle individualisé 36. Selon une configuration, l'installation de traite comprend un dispositif de contrôle individualisé 36 pour chaque tuyau de traite 16. Ainsi, le lait de chaque animal est contrôlé avant d'être mélangé avec le lait des autres animaux.

Chaque dispositif de contrôle individualisé 36 comprend un réservoir tampon 38, un système de pesage 40 auquel est suspendu le réservoir tampon 38, un tuyau de raccordement 42, dans lequel s'écoule de l'air et éventuellement de la mousse, qui présente une première extrémité 42.1 reliée au lactoduc 10 et une deuxième extrémité 42.2 débouchant en partie supérieure du réservoir tampon 38. Le tuyau de traite 16 présente une deuxième extrémité 16.2 qui débouche en partie supérieure du réservoir tampon 38 en étant reliée à un piquage positionné en partie supérieure du réservoir tampon 38.

Selon un mode de réalisation, le tuyau de raccordement 42 a la même section de passage que le tuyau de traite 16. Ainsi, le dispositif de contrôle individualisé 36 n'altère pas la traite et ne modifie pas la dépression créée au niveau de chaque faisceau trayeur. Selon une configuration, la première extrémité 42.1 du tuyau de raccordement 42 est reliée au lactoduc 10 via le piquage 24.

Le fait que le tuyau de raccordement 42 et le tuyau de traite 16 soient reliés à la partie supérieure du réservoir tampon 38, au niveau d'une zone proche du système de pesage 40, permet de limiter l'impact des secousses produites lors de la traite sur la mesure du poids du lait, rendant possible l'opération de pesage en continu, lors de la traite de l'animal.

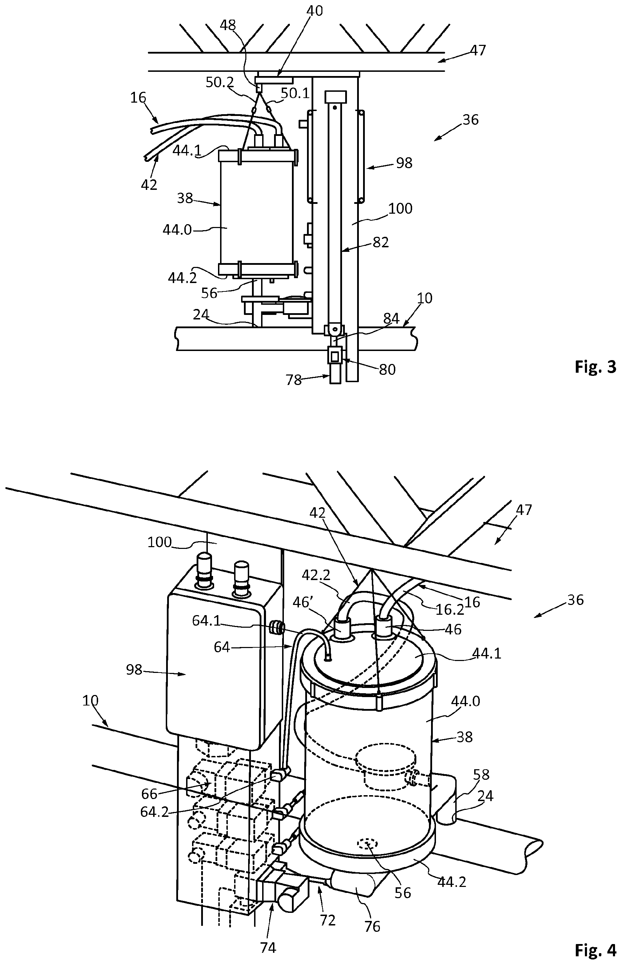

Selon un mode de réalisation visible sur les figures 3 à 5, le réservoir tampon 38 présente un corps central 44.0 cylindrique, fermé à chacune de ses extrémités supérieure et inférieure par des dômes supérieur et inférieur 44.1, 44.2. Selon une configuration, le réservoir tampon 38 a un volume inférieur ou égal à 5 L, de préférence compris entre 3,5 et 5L, ce qui correspond à un volume de lait maximal issu de la traite d'un ovin ou d'un caprin. Selon une configuration, le dôme inférieur 44.2 est positionné à une hauteur plus élevée que le lactoduc 10.

Selon un mode de réalisation, le dôme supérieur 44.1 présente des premier et deuxième piquages 46, 46' auxquels sont reliées respectivement les deuxièmes extrémités 16.2, 42.2 du tuyau de traite 16 et du tuyau de raccordement 42.

Selon une configuration, l'installation de traite comprend au moins une poutre support 47 positionnée au-dessus du lactoduc 10, les systèmes de pesage 40 des dispositifs de contrôle individualisé 36 étant fixés à la poutre support 47. Selon un mode de réalisation, la poutre support 47 s'étend sur toute la longueur de l'installation de traite.

Selon un mode de réalisation, la poutre support 47 est réalisée d'un seul tenant sur toute sa longueur. En variante, la poutre support 47 comprend plusieurs tronçons assemblés bout-à-bout.

Selon une configuration, la poutre support 47 est reliée à un bâti ou à un bâtiment seulement à chacune de ses extrémités ou elle peut être suspendue en au moins un point en plus d'être reliée à un bâti ou à un bâtiment à chacune de ses extrémités. Selon une particularité, la poutre support 47 doit être la plus rigide possible afin d'isoler chaque dispositif de contrôle individualisé 36 des vibrations générées par le reste de l'installation de traite, notamment lors de la traite.

Le système de pesage 40 est un capteur de force qui présente un crochet 48 auquel le réservoir tampon 38 est suspendu. A cet effet, trois liens 50.1, 50.2, 50.3, comme par exemple des chaînettes, relient le dôme supérieur 44.1 et le crochet 48. Les points d'ancrage de ces trois liens 50.1, 50.2, 50.3 sont régulièrement répartis en périphérie du dôme supérieur 44.1. Ainsi, le système de pesage 40 est relié à la partie supérieure du réservoir tampon 38.

Selon une configuration, le système de pesage 40 est configuré pour émettre un signal électrique 52 en fonction du poids du réservoir tampon 38 plus ou moins rempli de lait. Le système de pesage 40 permet une mesure du lait continue ou quasi continue lors de la traite de l'animal.

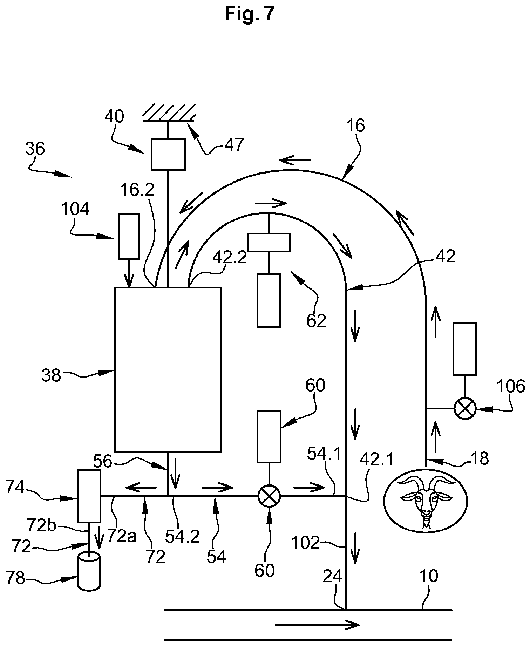

Selon une autre caractéristique, le dispositif de contrôle individualisé 36 comprend également un tuyau de vidange 54 qui présente une première extrémité 54.1 reliée au lactoduc 10 et une deuxième extrémité 54.2 débouchant en partie inférieure du réservoir tampon 38. Selon un mode de réalisation visible sur la figure 7, la première extrémité 54.1 du tuyau de vidange est reliée à la première extrémité 42.1 du tuyau de raccordement 42, les premières extrémités 54.1 et 42.1 étant reliées au lactoduc 10 grâce à un tronçon commun 102.

Selon un mode de réalisation, le dôme inférieur 44.2 comprend un piquage 56 en son point le plus bas pour permettre une vidange optimale du réservoir tampon 38.

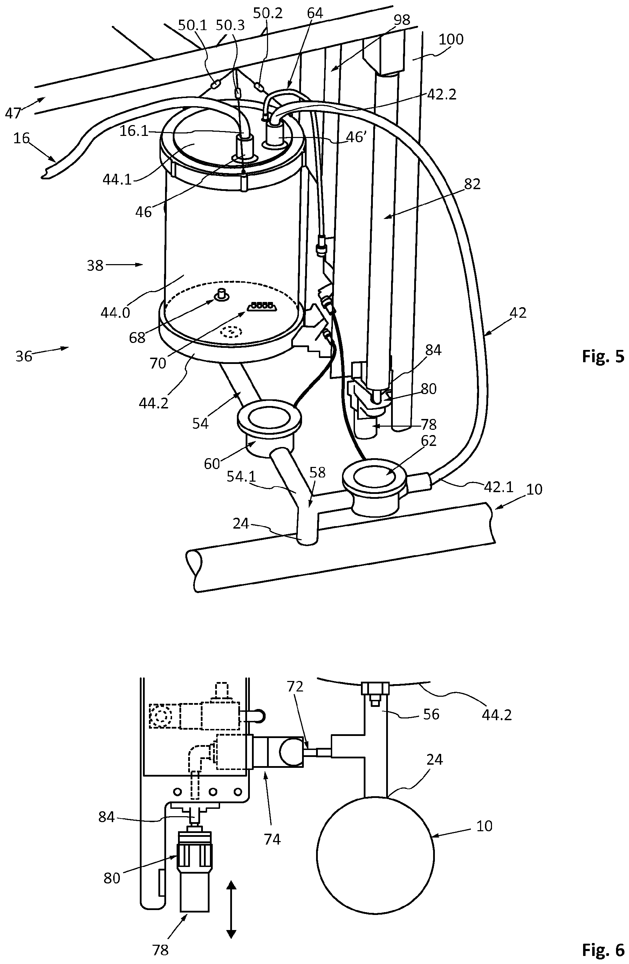

Selon une configuration visible sur la figure 5, le piquage 24 du lactoduc 10 comprend un raccord en T 58 qui présente une première extrémité reliée au piquage 24, une deuxième extrémité reliée à la première extrémité 42.1 du tuyau de raccordement 42 et une troisième extrémité reliée à la première extrémité 54.1 du tuyau de vidange 54.

Le dispositif de contrôle individualisé 36 comprend une première vanne (ou électrovanne) 60, au niveau du tuyau de vidange 54, configurée pour occuper un état bloqué dans lequel elle empêche un écoulement de fluide dans le conduit de vidange 54 et un état passant dans lequel elle autorise un écoulement de fluide dans le conduit de vidange 54, notamment au moment de la vidange du réservoir tampon 38.

Le dispositif de contrôle individualisé comprend une deuxième vanne 62, pour stopper la traite, configurée pour occuper un état bloqué dans lequel elle empêche un écoulement de fluide entre le faisceau trayeur 18 et le lactoduc 10 et un état passant dans lequel elle autorise un écoulement de fluide depuis le faisceau trayeur 18 jusqu'au lactoduc 10. Selon une configuration, la deuxième vanne 62 est positionnée au niveau du tuyau de raccordement 42. Selon un mode de réalisation visible sur la figure 7, la deuxième vanne 62 se présente sous la forme d'un vérin qui présente une tige mobile en translation configurée pour écraser le tuyau à l'état bloqué et ne pas l'écraser à l'état passant. Selon une configuration, la deuxième vanne 62 est positionnée de sorte que la zone de pincement du tuyau de raccordement 42 soit située au niveau ou à proximité de la partie la plus haute du tuyau de raccordement 42.

Ainsi, le lactoduc 10 génère une dépression à l'intérieur du réservoir tampon 38 lors de la traite, tant que la deuxième vanne 62 est à l'état passant et ne génère plus de dépression à l'intérieur du réservoir tampon 38 lorsque la traite est finie et que la deuxième vanne 62 est à l'état bloqué.

Selon les modes de réalisation, les première et deuxième vannes 60, 62 peuvent être de type pneumatique, hydraulique, électrique ou autre.

Le principe de fonctionnement du dispositif de contrôle individualisé 36 est le suivant.

Pendant la traite de l'animal, la première vanne 60 est à l'état bloqué et la deuxième vanne 62 à l'état passant. Au fur et à mesure de la traite, le réservoir tampon 38 se remplit de lait. Selon un premier mode de fonctionnement, le poids du lait est mesuré en temps réel par le système de pesage 40. Connaissant la durée entre deux mesures, il est alors possible de déterminer le débit de lait. Selon un deuxième mode de fonctionnement, le poids du lait est mesuré à la fin de la traite, notamment lorsque la deuxième vanne 62 est à l'état bloqué. Dans ce cas, il est possible de réaliser plusieurs mesures dans un laps de temps réduit et de faire une moyenne des mesures. Il est possible de combiner les deux modes de fonctionnement, à savoir utiliser le premier mode de fonctionnement pour arrêter la traite en commutant la deuxième vanne 62 à l'état bloqué, lorsque le débit calculé descend en dessous d'un seuil donné, puis utiliser le deuxième mode de fonctionnement, après l'arrêt de la traite pour déterminer le poids du lait de manière précise. Selon ce mode de fonctionnement, la première vanne 60 reste à l'état bloqué, après l'arrêt de la traite, pendant la phase de détermination du poids du lait.

Pour obtenir la vidange du réservoir tampon 38, la deuxième vanne 62 étant à l'état bloqué, la première vanne 60 est commutée à l'état passant. Dès lors le lait s'écoule du réservoir tampon 38 vers le lactoduc 10 via le tuyau de vidange 54. Après la vidange, pour recommencer un nouveau cycle, la première vanne 60 est commutée à l'état bloqué et la deuxième vanne 62 à l'état passant.

Pour faciliter la vidange, le dispositif de contrôle individualisé 36 comprend un système de mise à l'air configuré pour occuper un état bloqué dans lequel le réservoir tampon 38 est isolé de l'extérieur du réservoir tampon ou d'une prise d'air et un état passant dans lequel le réservoir 38 communique avec l'extérieur du réservoir tampon ou une prise d'air. Ce système de mise à l'air est relativement important car il permet de pouvoir détacher le faisceau trayeur 18 de l'animal à l'issue de la traite. Le système de mise à l'air est positionné en partie supérieure du réservoir tampon 38.

Selon un mode de réalisation visible sur les figures 2, 4 et 5, il comprend un tuyau d'échappement 64 qui présente une première extrémité 64.1 débouchant dans le réservoir tampon 38 et une deuxième extrémité 64.2 équipée d'une troisième vanne 66 configurée pour occuper un état passant dans lequel elle autorise le passage de l'air et un état bloqué dans lequel elle empêche le passage de l'air. Selon un mode de réalisation, le dôme supérieur 44.1 du réservoir tampon 38 comprend un piquage auquel est reliée la première extrémité 64.1 du tuyau d'échappement 64. Ainsi, selon un mode de fonctionnement, la troisième vanne 66 est à l'état passant lors de la vidange et reste à l'état bloqué le reste du temps. De plus, le lactoduc 10 est positionné en dessous du piquage 56 du dôme inférieur 44.2 de manière à ce que le lait s'écoule par gravité du réservoir tampon 38 vers le lactoduc 10.

Selon un autre mode de réalisation visible sur la figure 7, le système de mise à l'air comprend une ouverture en partie supérieure du réservoir tampon 38 ainsi qu'un ensemble plongeur solénoïde 104 configuré pour occuper un premier état bloqué dans lequel le plongeur obture l'ouverture lorsque le solénoïde n'est pas alimenté en courant électrique et un deuxième état passant dans lequel le plongeur n'obture pas l'ouverture lorsque le solénoïde est alimenté en courant électrique. A l'état passant ou de mise à l'air, l'intérieur du réservoir tampon 38 communique via l'ouverture avec l'extérieur. Ce mode de réalisation permet de réduire la consommation d'énergie.

Selon une autre caractéristique, le réservoir tampon 38 comprend au moins un capteur configuré pour mesurer ou évaluer au moins une caractéristique du lait stocké momentanément dans le réservoir tampon 38. Selon un mode de réalisation visible sur les figures 2 et 5, le réservoir tampon 38 comprend un capteur de température 68 et/ou un capteur de mesure de la conductivité du lait 70. Bien entendu, d'autres capteurs pourraient être prévus.

Selon une autre caractéristique, le dispositif de contrôle individualisé 36 comprend un système de prélèvement permettant de prélever un échantillon de lait stocké temporairement dans le réservoir tampon 38.

Selon un mode de réalisation, le système de prélèvement comprend un tuyau de prélèvement 72 présentant une première extrémité reliée au réservoir tampon 38 et une deuxième extrémité libre ainsi qu'une quatrième vanne 74 configurée pour occuper un état passant dans lequel elle permet un écoulement de lait du réservoir tampon 38 vers la deuxième extrémité du tuyau de prélèvement 72 et un état bloqué dans lequel elle empêche un écoulement de lait du réservoir tampon 38 vers la deuxième extrémité du tuyau de prélèvement 72. Selon une configuration, le piquage 56 du dôme inférieur 44.2 comprend un raccord en T 76 qui présente une première extrémité reliée au piquage 56, une deuxième extrémité reliée à la première extrémité 54.1 du tuyau de vidange 54 et une troisième extrémité reliée à une première extrémité 72a.1 d'un premier tronçon 72a du tuyau de prélèvement 72, la deuxième extrémité 72a.2 du premier tronçon 72a du tuyau de prélèvement 72 étant reliée à la quatrième vanne 74. Le tuyau de prélèvement 72 comprend un deuxième tronçon 72b, en aval de la quatrième vanne 74, qui présente une première extrémité 72b.1 reliée à la quatrième vanne 74 et une deuxième extrémité 72b.2 libre via laquelle s'écoule le lait prélevé.

Selon un agencement, le deuxième tronçon 72b est approximativement vertical. Il doit être le plus court possible pour que le lait ne stagne pas à l'intérieur du deuxième tronçon 72b entre deux prélèvements. Le deuxième tronçon 72b doit avoir une longueur inférieure ou égale à 5 cm.

En parallèle, le premier tronçon 72a du tuyau de prélèvement 72, positionné entre le réservoir tampon 38 et la quatrième vanne 74, est approximativement horizontal ou incliné vers la première extrémité 72a.1, en direction du tuyau de vidange 54, de manière à éviter que du lait ne stagne dans le premier tronçon 72a après la vidange du réservoir tampon 38. Ces agencements permettent de limiter la contamination de l'échantillon de lait d'un animal par du lait d'un animal trait précédemment.

Le système de prélèvement comprend également au moins un gobelet 78 dans lequel est déversé le lait prélevé. Généralement, le système de prélèvement comprend autant de gobelets 78 que de prélèvements à réaliser. Le système de prélèvement comprend également un support de gobelet 80 permettant de maintenir le gobelet 78 sous la deuxième extrémité libre du tuyau de prélèvement 72 de sorte que le lait prélevé s'écoule en sortie de la deuxième extrémité du tuyau de prélèvement 72 dans le gobelet 78 positionné sur le support de gobelet 80.

Selon une caractéristique de l'invention, le support de gobelet 80 est mobile verticalement pour permettre à un opérateur positionné dans la fosse 26 de saisir le gobelet 80, tout en ayant un deuxième tronçon 72b pour le tuyau de prélèvement 72 le plus court possible afin d'éviter que du lait ne stagne dans ledit deuxième tronçon 72b après la fermeture de la quatrième vanne 74. Selon un mode de réalisation, le système de prélèvement comprend un vérin 82, solidaire d'un châssis 100 relié à la poutre support 47, qui présente une tige 84 qui se translate verticalement entre une position rétractée dans laquelle le support de gobelet 80 est positionné en position haute juste sous le deuxième tronçon 72b du tuyau de prélèvement 72 et une position sortie dans laquelle le support de gobelet 80 est positionné en position basse de manière à permettre à un opérateur de saisir le gobelet 78 aisément. Bien entendu, d'autres moyens de mouvement vertical du support de gobelet 80 pourraient être prévus.

Le support de gobelet 80 est configuré de manière à maintenir le gobelet 78 vertical, notamment lors du prélèvement et des mouvements du gobelet entre la position haute et la position basse. Il doit également être configuré pour permettre à un opérateur de retirer aisément le gobelet 78 présent sur le support de gobelet 80 et de repositionner un nouveau gobelet 78 sur le support de gobelet 80 lorsque ce dernier est en position basse.

Le système de prélèvement fonctionne de la manière suivante. En fin de traite, lorsque la traite est stoppée et que la pompe à vide 20 ne génère plus de dépression à l'intérieur du réservoir tampon 38, la quatrième vanne 74 est commutée à l'état passant. Par gravité, le lait s'écoule du réservoir tampon 38 dans le gobelet 78 en passant par le tuyau de prélèvement 72. Si besoin, pour faciliter l'écoulement du lait, la troisième vanne 66 est commutée à l'état passant.

Après une certaine durée, les troisième et quatrième vannes 66, 74 sont repositionnées en position bloquée.

Pendant la traite, lorsque la pompe à vide 20 génère une dépression à l'intérieur du réservoir tampon 38, la quatrième vanne 74 peut être ouverte. Dans ce cas, compte tenu de la différence de pression entre l'intérieur et l'extérieur du réservoir tampon 38, l'air pénètre dans le réservoir tampon 38 via le tuyau de prélèvement 72 et génère à l'intérieur du réservoir tampon 38 un brassage du lait afin de l'homogénéiser pour obtenir des mesures plus fiables.

Le dispositif de contrôle individualisé 36 comprend un système d'identification de chaque prélèvement. A cet effet, le gobelet 78 comprend un identifiant unique qui lui est propre.

Selon une configuration, chaque gobelet 78 comprend un marqueur de gobelet 86 de type RFID, dans lequel est stocké l'identifiant du gobelet 78 et le dispositif de contrôle individualisé 36 comprend un premier lecteur de marqueur de gobelet 88 positionné à proximité du support de gobelet 80 lorsque ce dernier est en position haute.

Chaque dispositif de contrôle individualisé 36 comprend un unique premier lecteur de marqueur 88. Lorsque le dispositif de contrôle individualisé 36 est utilisé pour traire les animaux de plusieurs emplacements, l'installation de traite comprend un capteur de positionnement 90.1, 90.2 associé à chaque emplacement pour identifier de quel emplacement est issu le lait. Chaque capteur de positionnement 90.1, 90.2 est positionné de telle manière que :
- lorsque le faisceau trayeur 18 est mis en place sur l'animal positionné au niveau du premier emplacement 12.1, le tuyau de traite 16 actionne le premier capteur de positionnement 90.1 et n'actionne pas le deuxième capteur de positionnement 90.2, et
- lorsque le faisceau trayeur 18 est mis en place sur l'animal positionné au niveau du deuxième emplacement 12.2, le tuyau de traite 16 actionne le deuxième capteur de positionnement 90.2 et n'actionne pas le premier capteur de positionnement 90.1.

Généralement, chaque animal 14.1, 14.2 possède un marqueur d'animal 92, par exemple fixé au niveau d'une de ses oreilles. L'installation de traite comprend au moins un lecteur de marqueur d'animal 94.1, 94.2 configuré pour identifier l'animal de chaque emplacement. Selon une configuration, l'installation de traite comprend un lecteur de marqueur 94.1, 94.2 pour chaque rangée d'emplacements qui est configuré pour défiler au droit de chaque emplacement de la rangée, le long d'un rail 96.1, 96.2 à proximité de chaque mangeoire 34.

Le dispositif de contrôle individualisé comprend un automate 98 configuré pour contrôler les quatre vannes 60, 62, 66, 74 et qui est renseigné par le système de pesage 40, par le ou les capteur(s) 68, 70 équipant le réservoir tampon 78 et par les capteurs de positionnement 90.1, 90.2 et les lecteurs de marqueur 88, 94.1, 94.2. Un automate peut être prévu pour chaque dispositif de contrôle individualisé ou un automate peut être prévu pour plusieurs dispositifs de contrôle individualisé. Selon une configuration, un premier automate peut être prévu pour l'ensemble des dispositifs de contrôle individualisé et un deuxième automate pour chaque dispositif de contrôle individualisé.

Les dispositifs de contrôle individualisé peuvent être aisément mis en place sur les installations de traite existantes. Dans ce cas, des commandes existantes, comme les commandes de systèmes de décrochage 106 par exemple, peuvent être accouplées à l'automate 98 et utilisées pour par exemple commuter la deuxième vanne 62 à l'état bloqué afin de stopper la traite.

L'installation de traite comprend au moins un écran afin de visualiser pour chaque animal trait au moins certaines mesures ou informations. Cet écran peut éventuellement être utilisé pour sélectionner les emplacements au niveau desquels un échantillon doit être prélevé ou stopper la traite.

Ainsi, contrairement à l'art antérieur, la traite de chaque animal peut être arrêtée individuellement, de manière autonome et automatique, par l'automate 98 qui peut commuter, à partir des mesures du poids du lait, la deuxième vanne 62 à l'état bloqué lorsque la variation de poids descend en dessous d'un certain seuil ou lorsque le débit de lait descend en dessous d'un seuil donné, le débit de lait étant calculé par l'automate 98 à partir des mesures du poids du lait données par le système de pesage 40.

Contrairement à l'art antérieur, l'opérateur est informé au moment de la traite si le lait d'un animal présente une anomalie. Dans ce cas, l'opérateur peut agir en conséquence en prenant la mesure la plus appropriée, comme par exemple en déclenchant le prélèvement d'un échantillon pour l'animal concerné ou en ne mélangeant pas le lait de cet animal avec les autres. A partir des mesures fournies par les capteurs équipant le réservoir tampon 38, l'automate 98 est configuré pour comparer la (ou les) caractéristique(s) mesurée(s) avec au moins un critère prédéfini et émettre un signal ou une information si la (ou les) caractéristique(s) mesurée(s) n'est pas (ou ne sont pas) conforme(s) au(x) critère(s) prédéfini(s).

L'automate 98 est configuré pour stocker, dans au moins une base de données, pour chaque animal, l'identifiant animal, le poids du lait présent dans le réservoir tampon 38 à l'issue de la traite de l'animal. Ainsi, les dispositifs de contrôle individualisé facilitent la mise en place d'un suivi de la production de lait journalière de chaque animal. Grâce aux mesures de la conductivité du lait et de la température du lait pour chaque animal, on obtient un suivi régulier de l'état de santé de chaque animal. L'automate 98 peut également associer, pour chaque échantillon stocké dans un gobelet 78, l'identifiant du gobelet 78, l'identifiant de l'animal, le poids du lait présent dans le réservoir tampon à l'issue de la traite de l'animal, la conductivité du lait, la température du lait. Ainsi, le dispositif de contrôle individualisé permet d'établir une traçabilité efficace du lait de chaque animal.

## Revendications

1. Dispositif de contrôle individualisé du lait pour une installation de traite, ledit dispositif de contrôle comprenant :
- un réservoir tampon (38),
- un système de pesage (40) configuré pour peser le réservoir de pesage (38),
- un tuyau de raccordement (42) qui présente une première extrémité (42.1) configurée pour être reliée à un lactoduc (10) et une deuxième extrémité (42.2) débouchant en partie supérieure du réservoir tampon (38),
- un tuyau de traite (16) présentant une première extrémité reliée à un faisceau trayeur (18) et une deuxième extrémité reliée au réservoir tampon (38),
- un tuyau de vidange (54) qui présente une première extrémité (54.1) configurée pour être reliée au lactoduc (10) et une deuxième extrémité (54.2) reliée en partie inférieure du réservoir tampon (38), et
- une première vanne (60), au niveau du tuyau de vidange (54), configurée pour occuper un état bloqué dans lequel elle empêche un écoulement de fluide dans le conduit de vidange (54) et un état passant dans lequel elle autorise un écoulement de fluide dans le conduit de vidange (54),
**caractérisé en ce que** le dispositif de contrôle comprend une deuxième vanne (62) configurée pour occuper un état passant dans lequel elle permet la traite et un état bloqué dans lequel elle stoppe la traite et **en ce que** la deuxième extrémité du tuyau de traite (16) est reliée à un piquage positionné en partie supérieure du réservoir tampon (38).

2. Dispositif de contrôle individualisé du lait selon la revendication précédente, **caractérisé en ce qu'**il comprend un système de mise à l'air configuré pour occuper un état bloqué dans lequel le réservoir tampon 38 est isolé de l'extérieur du réservoir tampon ou d'une prise d'air et un état passant dans lequel le réservoir 38 communique avec l'extérieur du réservoir tampon ou une prise d'air.

3. Dispositif de contrôle individualisé du lait selon la revendication précédente, **caractérisé en ce que** le système de mise à l'air comprend une ouverture en partie supérieure du réservoir tampon (38) ainsi qu'un ensemble plongeur/solénoïde (104) configuré pour occuper un premier état bloqué dans lequel le plongeur obture l'ouverture lorsque le solénoïde n'est pas alimenté et un deuxième état passant dans lequel le plongeur n'obture pas l'ouverture lorsque le solénoïde est alimenté.

4. Dispositif de contrôle individualisé du lait selon l'une des revendications précédentes, **caractérisé en ce qu'**il comprend :
- un tuyau de prélèvement (72) présentant une première extrémité reliée au réservoir tampon (38) et une deuxième extrémité libre,
- une quatrième vanne (74) configurée pour occuper un état passant dans lequel elle permet un écoulement de lait du réservoir tampon (38) vers la deuxième extrémité du tuyau de prélèvement (72) et un état bloqué dans lequel elle empêche un écoulement de lait du réservoir tampon (38) vers la deuxième extrémité du tuyau de prélèvement (72), et
- un support de gobelet (80) permettant de maintenir un gobelet (78) sous la deuxième extrémité libre du tuyau de prélèvement (72) de sorte que le lait prélevé s'écoule dans le gobelet (78) positionné sur le support de gobelet (80).

5. Dispositif de contrôle individualisé du lait selon la revendication précédente, **caractérisé en ce que** le support de gobelet (80) est mobile verticalement entre une position haute dans laquelle le support de gobelet (80) est positionné juste sous la deuxième extrémité du tuyau de prélèvement (72) et une position basse dans laquelle le support de gobelet (80) est positionné de manière à permettre à un opérateur de saisir le gobelet (78) présent sur le support de gobelet (80).

6. Dispositif de contrôle individualisé du lait selon la revendication 4 ou 5, **caractérisé en ce que** le tuyau de prélèvement comprend un premier tronçon (72a), entre le réservoir tampon (38) et la quatrième vanne (74), approximativement horizontal ou incliné en direction du tuyau de vidange (54) et un deuxième tronçon (72b), en aval de la quatrième vanne (74), ayant une longueur inférieure ou égale à 5 cm.

7. Dispositif de contrôle individualisé du lait selon l'une des revendications 4 à 6, **caractérisé en ce qu'**il comprend un système d'identification qui comporte un lecteur de marqueur de gobelet (88) positionné à proximité du support de gobelet (80), chaque gobelet (78) présentant un identifiant unique qui lui est propre stocké dans un marqueur de gobelet (86).

8. Dispositif de contrôle individualisé du lait selon l'une des revendications précédentes, **caractérisé en ce qu'**il comprend un automate (98) configuré pour, à partir des mesures données par le système de pesage (40), commuter automatiquement et de manière autonome la deuxième vanne (62) à l'état bloqué.

9. Dispositif de contrôle individualisé du lait selon l'une des revendications 1 à 6, **caractérisé en ce qu'**il comprend au moins un capteur (68, 70) configuré pour mesurer ou évaluer au moins une caractéristique du lait stocké momentanément dans le réservoir tampon (38), un automate (98) configuré pour comparer la (ou les) caractéristique(s) mesurée(s) avec au moins un critère prédéfini et émettre un signal ou une information si la (ou les) caractéristique(s) mesurée(s) n'est pas (ou ne sont pas) conforme(s) au(x) critère(s) prédéfini(s).

10. Installation de traite comprenant plusieurs dispositifs de contrôle individualisé selon l'une des revendications précédentes.

11. Installation de traite selon la revendication précédente, **caractérisée en ce qu'**elle comprend plusieurs emplacements (12.1, 12.2) au niveau de chacun desquels est positionné un animal au moment de la traite et au moins un lecteur de marqueur d'animaux (94.1, 94.2) configuré pour identifier l'animal de chaque emplacement, chaque animal (14.1, 14.2) possédant un marqueur d'animaux (92).

12. Installation de traite selon la revendication précédente, **caractérisé en ce que** lorsque le dispositif de contrôle individualisé (36) est utilisé pour traire des animaux de plusieurs emplacements, l'installation de traite comprend un capteur de positionnement (90.1, 90.2) associé à chaque emplacement pour déterminer de quel emplacement est issu le lait.

## Patentansprüche

1. Vorrichtung für eine individualisierte Milchsteuerung einer Melkanlage, wobei die Vorrichtung für die Steuerung umfasst:
- einen Pufferbehälter (38),
- ein Wägesystem (40), das zum Wiegen dem Pufferbehälter (38) eingerichtet ist,
- eine Verbindungsleitung (42) mit einem ersten Ende (42.1), das zum Anschluss an eine Milchleitung (10) eingerichtet ist, und mit einem zweiten Ende (42.2), das in einen oberen Bereich des Pufferbehälters (38) mündet,
- eine Melkleitung (16), deren erstes Ende mit einem Melkzeug (18) und dessen zweites Ende mit dem Pufferbehälter (38) verbunden ist,
- eine Ablassleitung (54) mit einem ersten Ende (54.1), das so eingerichtet ist, dass es mit der Milchleitung (10) verbunden ist, und mit einem zweiten Ende (54.2), das mit einem unteren Bereich des Pufferbehälters (38) verbunden ist, und
- ein erstes Ventil (60) an der Ablassleitung (54), das so eingerichtet ist, dass es einen Sperrzustand einnimmt, in dem es einen Fluidstrom in der Ablassleitung (54) verhindert, und einen Durchlasszustand einnimmt, in dem es einen Fluidstrom in der Ablassleitung (54) zulässt,
**dadurch gekennzeichnet, dass** die Vorrichtung für die Steuerung ein zweites Ventil (62) umfasst, das so eingerichtet ist, dass es einen Durchlasszustand einnimmt, in dem es das Melken zulässt, und einen Sperrzustand einnimmt, in dem es das Melken stoppt, und dass das zweite Ende der Melkleitung (16) mit einem Anschluss verbunden ist, der im oberen Bereich des Pufferbehälters (38) angeordnet ist.

2. Vorrichtung für eine individualisierte Milchsteuerung nach dem vorhergehenden Anspruch, **dadurch gekennzeichnet, dass** diese ein Belüftungssystem umfasst, das so eingerichtet ist, dass es einen Sperrzustand einnimmt, in dem der Pufferbehälter (38) vom Außenraum des Pufferbehälters oder einem Lufteinlass isoliert ist, und einen Durchlasszustand einnimmt, in dem der Pufferbehälter (38) mit einem Außenraum des Pufferbehälters oder einem Lufteinlass in Verbindung steht.

3. Vorrichtung für eine individualisierte Milchsteuerung nach dem vorhergehenden Anspruch, **dadurch gekennzeichnet, dass** das Belüftungssystem eine Öffnung im oberen Bereich des Pufferbehälters (38) und eine Druckstück/Spulen-Baugruppe (104) umfasst, die so eingerichtet ist, dass diese einen ersten Sperrzustand einnimmt, in dem das Druckstück die Öffnung schließt, wenn die Spule nicht erregt ist, und einen zweiten Durchlasszustand einnimmt, in dem das Druckstück die Öffnung nicht schließt, wenn das Magnetventil erregt ist.

4. Vorrichtung für eine individualisierte Milchsteuerung nach einem der vorhergehenden Ansprüche, **dadurch gekennzeichnet, dass** diese umfasst:
- eine Probenentnahmeleitung (72) mit einem ersten Ende, das mit dem Pufferbehälter (38) verbunden ist, und einem zweiten freien Ende,
- ein viertes Ventil (74), das so eingerichtet ist, dass es einen Durchlasszustand einnimmt, in dem es einen Milchfluss vom Pufferbehälter (38) zum zweiten Ende der Probenentnahmeleitung (72) zulässt, und einen Sperrzustand einnimmt, in dem es einen Milchfluss vom Pufferbehälter (38) zum zweiten Ende der Probenentnahmeleitung (72) verhindert, und
- einen Becherhalter (80) zum Halten eines Bechers (78) unterhalb des zweiten freien Endes der Probenentnahmeleitung (72), so dass die gesammelte Milch in den auf dem Becherhalter (80) positionierten Becher (78) fließt.

5. Vorrichtung für eine individualisierte Milchsteuerung nach dem vorhergehenden Anspruch, **dadurch gekennzeichnet, dass** der Becherhalter (80) vertikal zwischen einer oberen Position, in der der Becherhalter (80) gerade unterhalb des zweiten Endes der Probenentnahmeleitung (72) angeordnet ist, und einer unteren Position beweglich ist, in der der Becherhalter (80) so angeordnet ist, dass ein Benutzer den auf dem Becherhalter (80) befindlichen Becher (78) fassen kann.

6. Vorrichtung für eine individualisierte Milchsteuerung nach Anspruch 4 oder 5, **dadurch gekennzeichnet, dass** die Probenentnahmeleitung einen ersten Abschnitt (72a) zwischen dem Pufferbehälter (38) und dem vierten Ventil (74) aufweist, der annähernd horizontal oder zur Ablassleitung (54) hin geneigt ist, und einen zweiten Abschnitt (72b) stromabwärts des vierten Ventils (74) aufweist, der eine Länge von 5 cm oder weniger aufweist.

7. Vorrichtung für eine individualisierte Milchsteuerung nach einem der Ansprüche 4 bis 6, **dadurch gekennzeichnet, dass** diese ein Identifikationssystem umfasst, das einen Bechermarkierungsleser (88) enthält, der in der Nähe des Becherhalters (80) angeordnet ist, wobei jeder Becher (78) eine eigene, eindeutige Kennung aufweist, die in einer Bechermarkierung (86) gespeichert ist.

8. Vorrichtung für eine individualisierte Milchsteuerung nach einem der vorhergehenden Ansprüche, **dadurch gekennzeichnet, dass** diese eine automatische Steuerung (98) umfasst, die so eingerichtet ist, dass sie das zweite Ventil (62) automatisch und autonom in den Sperrzustand schaltet, in Abhängigkeit von Messungen, die von dem Wiegesystem (40) zur Verfügung gestellt werden.

9. Vorrichtung für eine individualisierte Milchsteuerung nach einem der Ansprüche 1 bis 6, **dadurch gekennzeichnet, dass** diese wenigstens einen Sensor (68, 70) aufweist, der zur Messung oder Auswertung mindestens einer Eigenschaft der im Pufferbehälter (38) momentan gespeicherten Milch eingerichtet ist, und eine automatische Vorrichtung (98) aufweist, die so eingerichtet ist, dass sie die gemessene(n) Eigenschaft(en) mit mindestens einem vordefinierten Kriterium vergleicht und ein Signal oder eine Information ausgibt, wenn die gemessene(n) Eigenschaft(en) das/die vordefinierte(n) Kriterium/Kriterien nicht erfüllen.

10. Melkanlage mit einer Vielzahl Vorrichtung für eine individualisierte Milchsteuerung nach einem der vorhergehenden Ansprüche.

11. Melkanlage nach dem vorhergehenden Anspruch, **dadurch gekennzeichnet, dass** diese mehrere Standorte (12.1, 12.2) aufweist, an denen jeweils ein Tier zum Zeitpunkt des Melkens positioniert ist, und mindestens einen Tiermarkierungsleser (94.1, 94.2) aufweist, der so eingerichtet ist, dass er das Tier jedes Standortes identifiziert, wobei jedes Tier (14.1, 14.2) eine Tiermarkierung (92) aufweist.

12. Melkanlage nach dem vorhergehenden Anspruch, **dadurch gekennzeichnet, dass** die Melkanlage, wenn die Vorrichtung für eine individualisierte Steuerung (36) zum Melken von Tieren an mehreren Standorten aus verwendet wird, einen Positionierungssensor (90.1, 90.2) aufweist, der jedem Standort zugeordnet ist, um festzustellen, von welchem Standort die Milch stammt.

## Claims

1. Device for the individualized monitoring of milk for a milking installation, said monitoring device comprising:
- a buffer tank (38),
- a weighing system (40) configured to weigh the buffer tank (38),
- a connecting pipe (42) which has a first end (42.1) configured to be connected to a milk pipeline (10) and a second end (42.2) that opens into the upper part of the buffer tank (38),
- a milking pipe (16) having a first end connected to a milking cluster (18) and a second end connected to the buffer tank (38),
- a discharge pipe (54) which has a first end (54.1) configured to be connected to the milk pipeline (10) and a second end (54.2) connected to the lower part of the buffer tank (38), and
- a first valve (60), at the discharge pipe (54), configured to occupy a closed state in which it prevents fluid from flowing through the discharge line (54) and an open state in which it allows fluid to flow through the discharge line (54),
**characterized in that** the monitoring device comprises a second valve (62) configured to occupy an open state in which it allows milking and a closed state in which it stops the milking, and **in that** the second end of the milking pipe (16) is connected to a branch positioned in the upper part of the buffer tank (38).

2. Device for the individualized monitoring of milk according to the preceding claim, **characterized in that** it comprises a venting system configured to occupy a closed state in which the buffer tank 38 is isolated from the outside of the buffer tank or an air intake, and an open state in which the buffer tank 38 communicates with the outside of the buffer tank or an air intake.

3. Device for the individualized monitoring of milk according to the preceding claim, **characterized in that** the venting system comprises an opening in the upper part of the buffer tank (38) and a plunger/solenoid assembly (104) configured to occupy a first, closed state in which the plunger closes the opening when the solenoid is not powered and a second, open state in which the plunger does not close the opening when the solenoid is powered.

4. Device for the individualized monitoring of milk according to one of the preceding claims, **characterized in that** it comprises:
- a sampling pipe (72) having a first end connected to the buffer tank (38) and a second, free end,
- a fourth valve (74) configured to occupy an open state in which it allows milk to flow from the buffer tank (38) to the second end of the sampling pipe (72) and a closed state in which it prevents milk from flowing from the buffer tank (38) to the second end of the sampling pipe (72), and
- a cup support (80) for holding a cup (78) under the second, free end of the sampling pipe (72) such that the sampled milk flows into the cup (78) positioned on the cup support (80).

5. Device for the individualized monitoring of milk according to the preceding claim, **characterized in that** the cup support (80) is movable vertically between a high position in which the cup support (80) is positioned just under the second end of the sampling pipe (72) and a low position in which the cup support (80) is positioned so as to allow an operator to take hold of the cup (78) present on the cup support (80).

6. Device for the individualized monitoring of milk according to Claim 4 or 5, **characterized in that** the sampling pipe comprises a first portion (72a), between the buffer tank (38) and the fourth valve (74), which is approximately horizontal or inclined towards the discharge pipe (54), and a second portion (72b), downstream of the fourth valve (74), having a length less than or equal to 5 cm.

7. Device for the individualized monitoring of milk according to one of Claims 4 to 6, **characterized in that** it comprises an identification system which has a cup marker reader (88) positioned close to the cup support (80), each cup (78) having a unique identifier of its own stored in a cup marker (86).

8. Device for the individualized monitoring of milk according to one of the preceding claims, **characterized in that** it comprises an automaton (98) configured to automatically and autonomously switch the second valve (62) to the closed state on the basis of measurements provided by the weighing system (40).

9. Device for the individualized monitoring of milk according to one of Claims 1 to 6, **characterized in that** it comprises at least one sensor (68, 70) configured to measure or evaluate at least one characteristic of the milk currently stored in the buffer tank (38), an automaton (98) configured to compare the characteristic(s) measured with at least one predefined criterion and to output a signal or item of information if the characteristic(s) measured is/are not in accordance with the predefined criterion/criteria.

10. Milking installation comprising a plurality of devices for individualized monitoring according to one of the preceding claims.

11. Milking installation according to the preceding claim, **characterized in that** it comprises a plurality of stations (12.1, 12.2) at each of which an animal is positioned during milking and at least one animal marker reader (94.1, 94.2) configured to identify the animal at each station, each animal (14.1, 14.2) having an animal marker (92).

12. Milking installation according to the preceding claim, **characterized in that** when the individualized monitoring device (36) is used to milk animals at several stations, the milking installation comprises a position sensor (90.1, 90.2) associated with each station in order to determine which station the milk has come from.
